# EUROPÄISCHE PATENTSCHRIFT

(11) **EP 2 527 163 B1**
(45) Veröffentlichungstag und Bekanntmachung des Hinweises auf die Patenterteilung: **16.07.2014**
(21) Anmeldenummer: 11167618.5
(22) Anmeldetag: 26.05.2011
(51) Int. Cl.: B60C 11/04

(54) **Fahrzeugluftreifen**
Pneumatic tyre for a vehicle
Pneu de véhicule

(43) Veröffentlichungstag der Anmeldung: 28.11.2012
(73) Patentinhaber: Continental Reifen Deutschland GmbH, 30165 Hannover (DE)
(72) Erfinder: Schiller, Robert, 30161 Hannover (DE); Yalamanchili, Kalyan, 30657 Hannover (DE); Schirra, Daniela, 30161 Hannover (DE)
(74) Vertreter: Finger, Karsten

(56) Entgegenhaltungen:
- EP-A1- 2 080 642
- US-A- 2 781 815
- US-A- 5 660 652
- US-A- 6 116 309

## Beschreibung

Die Erfindung betrifft einen Fahrzeugluftreifen in Radialbauart mit einem zumindest zweilagigen Gürtel und mit einem Laufstreifen, wobei der Laufstreifen Profilrillen innerhalb der axialen Breite von TW 45 zur Bildung von Profilpositiven aufweist, deren Maximaltiefe innerhalb der axialen Breite von TW 45 variiert und wobei der Laufstreifen eine am montierten und aufgepumpten Reifen anhand von Außenkonturradiendifferenzen definierte Außenkontur aufweist, wobei die Maximaltiefe der Profilrillen innerhalb eines Mittenbereiches von TW 45 gleich ist und wobei die Maximaltiefe der Rillen im Schulterbereich um maximal 2 mm kleiner als im Mittenbereich ist.

Derartige Fahrzeugluftreifen sind dem Fachmann hinreichend bekannt und beispielsweise in der EP 2 080 642 A1, der US 5 660 652 A oder der US 2 781 815 A offenbart. Diese Fahrzeugluftreifen weisen zumeist eine vergleichsweise runde Laufstreifenaußenkontur sowie derartige Rillentiefen auf, welche im Zenit des Laufstreifens geringer als außerhalb des Zenites sind. Die Rillentiefe in Umlaufrichtung einer Rillen ist üblicherweise gleich.

Der Gürtel und insbesondere die Gürtelkanten weisen - im Reifenquerschnitt betrachtet - im unbelasteten Zustand des Reifens eine konvexe Ausbildung auf. Im Belastungszustand des Reifens werden die Gürtelkanten nach radial oben deformiert. Diese Bewegung und Deformation der Gürtelkanten hat nachteilige Auswirkungen auf bestimmte Leistungsmerkmale des Reifens wie auf Quersteifigkeit, Abrieb und Rollwiderstand. Denn durch die "Anhebung" der Gürtelkanten im Betrieb des Reifens wird ebenfalls der radial oberhalb liegende Laufstreifenabschnitt mit nach radial oben als auch in Richtung Reifenzenit angehoben. Die Quersteifigkeit und der Rollwiderstand des Reifens sind hierdurch nachteilig beeinflusst. Die vorbeschriebene Deformation des Gürtels und des Laufstreifens bedingt Scherkräfte, die zu vermehrten Gleitbewegungen in der Bodenkontaktfläche des Laufstreifens führen, wodurch Reibkräfte entstehen, welche für eine verstärkte Abnutzung des Reifens verantwortlich sind.

Durch die vorbeschriebene Deformation ist die Quersteifigkeit nachteilig verringert, als auch der Rollwiderstand und die Abnutzung des Reifens nachteilig erhöht.

Die Leistungsmerkmale Quersteifigkeit, Rollwiderstand und Abnutzung stehen in einem sogenannten Zielkonflikt zueinander, wobei bisher bei Verbesserung des Rollwiderstandes und der Quersteifigkeit die Abnutzung verschlechtert wurde und vice versa.

Der Erfindung liegt die Aufgabe zu Grunde, einen Reifen der eingangs genannten Art zu schaffen, bei dem der Zielkonflikt zwischen Quersteifigkeit, Rollwiderstand und Abnutzung auf einem höheren Niveau gelöst ist..

Gelöst wird die gestellte Aufgabe erfindungsgemäß dadurch, dass die Außenkontur des Laufstreifens im Mittenbereich derart flach gestaltet ist, dass die Außenkonturradiusdifferenz zwischen Zenit und dem axialen Ende des Mittenbereiches weniger als 1 mm beträgt und dass die Außenkontur des Laufstreifens im Bereich des Überganges zum Schulterbereich derart gestaltet ist, dass die Außenkonturradiusdifferenz zwischen Zenit und diesem Übergang zum Schulterbereich zwischen 3 mm bis 5 mm beträgt.

Die Erfinder haben überraschenderweise festgestellt, dass eine bestimmte Außenkontur des Laufstreifens in Kombination mit einer bestimmten Verteilung der maximalen Rillentiefen in axialer Richtung eine signifikante Auswirkung auf die Deformation des Gürtels hat und somit eine Verbesserung der Leistungsmerkmale Abrieb, Quersteifigkeit und Rollwiderstand bewirkt.

Ein Fahrzeugluftreifen mit einer erfindungsgemäßen Außenkontur und Rillenverteilung weist eine stark verringerte Deformation des Gürtels auf, so dass der Zielkonflikt zwischen Quersteifigkeit, Rollwiderstand und Abnutzung auf einem höheren Niveau gelöst wird.

Der erfindungsgemäße Fahrzeugluftreifen weist im Betrieb im Mittenbereich eine flache und im Schulterbereich eine gerundete Laufstreifenaußenkontur auf. Die maximaltiefen Rillen weisen im Schulterbereich eine Tiefe auf, die maximal um 2 mm geringer als im Mittenbereich ist.

Definitionsgemäß weist der Laufstreifen einen Mittenbereich und einen Schulterbereich auf.

"TW 45" ist die Breite des Laufstreifens zwischen zwei Punkten P_{TW}, wobei jeder dieser Punkte P_{TW} der Schnittpunkt einer unter 45° zur Radialen an der Schulteraußenseite verlaufenden Tangente mit einer in Verlängerung der Außenkontur des Laufstreifens verlaufenden Kurve ist.

"Mittenbereich" ist ein um die Umfangsrichtung des Reifens umlaufender Laufstreifenbereich, welcher - im Reifenquerschnitt betrachtet - eine axiale Erstreckung von 40% - 60% von TW 45 einnimmt und symmetrisch sowie zentriert in Bezug auf den Reifenzenit ausgerichtet ist.

"Schulterbereich" ist ein um die Umfangsrichtung des Reifens umlaufender Laufstreifenbereich, welcher - im Reifenquerschnitt betrachtet - sich axial von 80% von TW45 bis 90% von TW45 erstreckt und symmetrisch sowie zentriert in Bezug auf den Reifenzenit ausgerichtet ist.

"Außenkonturradius" meint den radialen Abstand zwischen einem Punkt auf der Außenkontur und der Radachse.

"Außenkonturradiusdifferenz" meint den radialen Abstand zwischen einem Punkt auf der Außenkontur und dem Zenit.

Der "Rollradius" ist der sich aus dem Abrollumfang des am Fahrzeug montierten Reifens unter Radlast und entsprechendem Innendruck gemäß E.T.R.T.O. Standards ergebende Radius. Die Rollradiusdifferenz ergibt sich somit aus den unterschiedlichen Abrollumfängen an den Messpunkten entlang des Querschnitts.

"Reifenzenit" oder "Zenit" ist - im Reifenquerschnitt betrachtet - der Schnittpunkt zwischen der Äquatorebene des Reifens und der Außenkontur des Laufstreifens.

"Maximaltiefe Rillen" meint diejenigen Rillen, beispielsweise Umfangsrillen oder Querrillen, die am tiefsten ausgebildet sind. Eine parallel zur Laufstreifenaußenkontur verlaufende, die tiefste(n) (maximaltiefen) Rille(n) von radial innen berührende Einhüllende bildet den sogenannten "Unterkonturzug".

Profilrillentiefen werden senkrecht zur Laufstreifenaußenkontur gemessen.

Die in den Beschreibungen enthaltenen Werte für Radiendifferenzen und sonstige Abmessungen des Reifens sind auf einen auf einer Felge und unter Nenndruck (gemäß E.T.R.T.O. Standards) gesetzten Reifen bezogen. Die Formdaten (Abmessungen aus der Vulkanisationsform) weisen im Allgemeinen im Wesentlichen übereinstimmende Abmessungen auf.

Gemäß einer bevorzugten Ausführungsform der Erfindung ist eine Gürtelbandage vorhanden, welche vorzugsweise einlagig ausgeführt ist. Dies führt zu einer deutlichen Verbesserung des Rollwiderstandes.

Vorteilhaft ist es, wenn der Gürtel zweilagig ausgeführt ist, wobei die Festigkeitsträger der beiden Gürtellagen einen Gürtelwinkel von kleiner 24°, gemessen im Reifenzenit, aufweisen. Eine derartige Ausführung minimiert die Abrollradiendifferenzen bzw. die Außenkonturradiendifferenzen und führt zu geringerem Schlupf in der Bodenaufstandsfläche des Reifens.

Bei einer bevorzugten Ausführungsvariante der Erfindung beträgt die Außenkonturradiusdifferenz zwischen Zenit und dem axialen Ende des Mittenbereiches etwa 0,3 mm. Es ist eine besonders flache Außenkontur im Mittenbereich geschaffen, die besonders vorteilhaft eine nur geringe Deformation der Gürtelkanten bewirkt.

Weitere Merkmale, Vorteile und Einzelheiten der Erfindung werden anhand einer Tabelle und anhand der Zeichnungen, die schematische Ausführungsbeispiele darstellen, näher erläutert. Dabei zeigen die:
Fig. 1 einen Querschnitt durch einen Fahrzeugluftreifen für Personenkraftwagen gemäß dem Stand der Technik;
Fig. 2 im Querschnitt die Laufstreifenkontur einer Reifenhälfte zur Ermittlung von P_{TW};
Fig. 3 eine Querschnittshälfte durch den Laufstreifen des erfindungsgemäßen Reifens (durchgezogene Linie) im Vergleich zum Reifen des Standes der Technik (gestrichelte Linie);
Fig. 4a eine Querschnittshälfte eines Reifens des Standes der Technik im Normalzustand und im Betriebszustand;
Fig. 4b eine Querschnittshälfte eines erfindungsgemäßen Reifens im Normalzustand und im Betriebszustand.

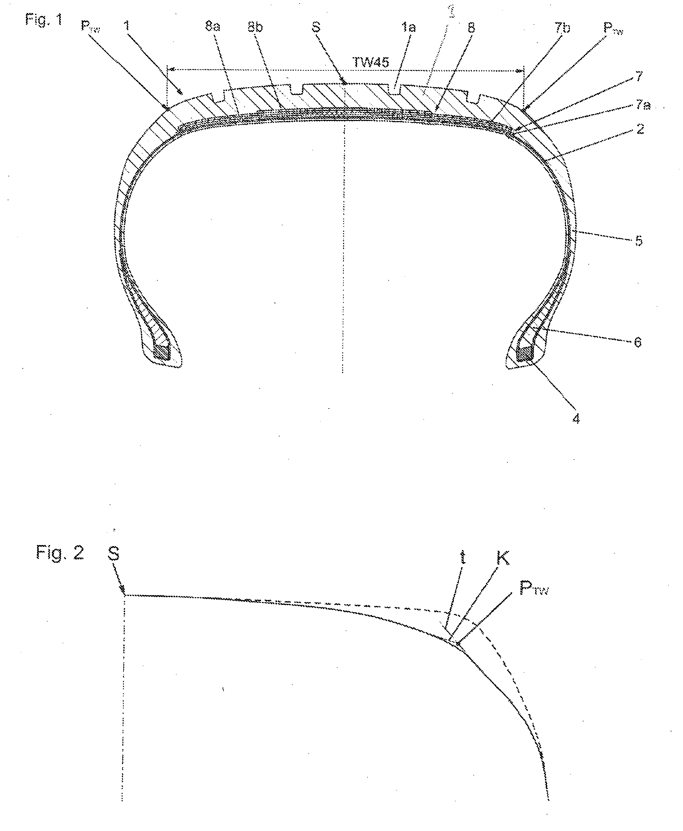

Der in **Fig. 1** schematisch gezeigte Querschnitt eines Fahrzeugluftreifens ist ein Pkw-Reifen des Standes der Technik mit einem Laufstreifen 1, einer Karkasse 2, die in Wulstbereichen um Wulstkerne 4 verläuft und im Bereich von Seitenwänden 5 endet, mit Kernprofilen 6 radial außerhalb der Wulstkerne 4 und einem Gürtelverband 7 bestehend aus zwei Gürtellagen 7a, 7b und einer Bandage 8 aus zwei Bandagenlagen 8a, 8b.

Der Laufstreifen 1 ist mit einer Profilierung versehen, von welcher in Fig. 1 beispielhaft Umfangsrillen 1a dargestellt sind. Die die Profilierung bildenden Profilrillen sind innerhalb der axialen Breite von TW 45 zur Bildung von Profilpositiven 3 angeordnet, deren Maximaltiefe innerhalb der axialen Breite von TW 45 variiert. Der Laufstreifen weist eine am montierten und aufgepumpten Reifen anhand von Außenkonturradiendifferenzen definierte Außenkontur auf.

Zwischen dem Laufstreifen 1 und der Karkasse 2 befinden sich die beiden Gürtellagen 7a, 7b, wobei die radial weiter innen gelegene Gürtellage 7a die breitere der beiden Gürtellagen 7a, 7b ist. Die beiden Gürtellagen 7a, 7b können auf herkömmliche Weise aufgebaut sein und aus in eine Gummimischung eingebetteten und innerhalb jeder Lage jeweils parallel zueinander verlaufenden Festigkeitsträgern, insbesondere Stahlkorden, bestehen. Die gegenseitige Anordnung der Stahlkorde in den beiden Gürtellagen 7a, 7b erfolgt derart, dass sich die in der einen Lage verlaufenden Stahlkorde mit jenen, die in der zweiten Gürtellage verlaufen, kreuzen, wobei die Stahlkorde in jeder der Gürtellagen 7a, 7b mit der Umfangsrichtung einen bestimmten Winkel, den sogenannten Gürtelwinkel, einschließen.

Die Bandage 8 besteht aus einer radial inneren, den gesamten Gürtel 7 bis über die Seitenränder der radial inneren Gürtellage 7a hinaus abdeckenden Bandagenlage 8a und verlaufenden, ebenfalls über den Reifenumfang umlaufenden Mittenbandage 8b, welche sich über 10 % bis 80 %, insbesondere mindestens 50 %, der Breite der Bandagenlage 8a erstreckt.

Die eingezeichnete Laufstreifenbreite TW 45 ist etwas größer als die Breite des Reifenabdruckes im Untergrund, wenn der Reifen auf einer Felge montiert ist und unter Druck gesetzt ist. Die Breite TW 45 ist der gegenseitige Abstand zweier Punkte P_{TW}, deren Lage wie folgt ermittelt wird. Die Punkte P_{TW} liegen, wie es **Fig. 2** zeigt, jeweils im Schnittpunkt einer unter 45 Grad zur radialen Richtung verlaufenden Tangente t an die Reifenschulter mit einer flachen Kurve k, welche die Verlängerung der Außenkontur des Laufstreifens, über den seitlichen Rand der Bodenaufstandsflächenbreite hinaus, ist.

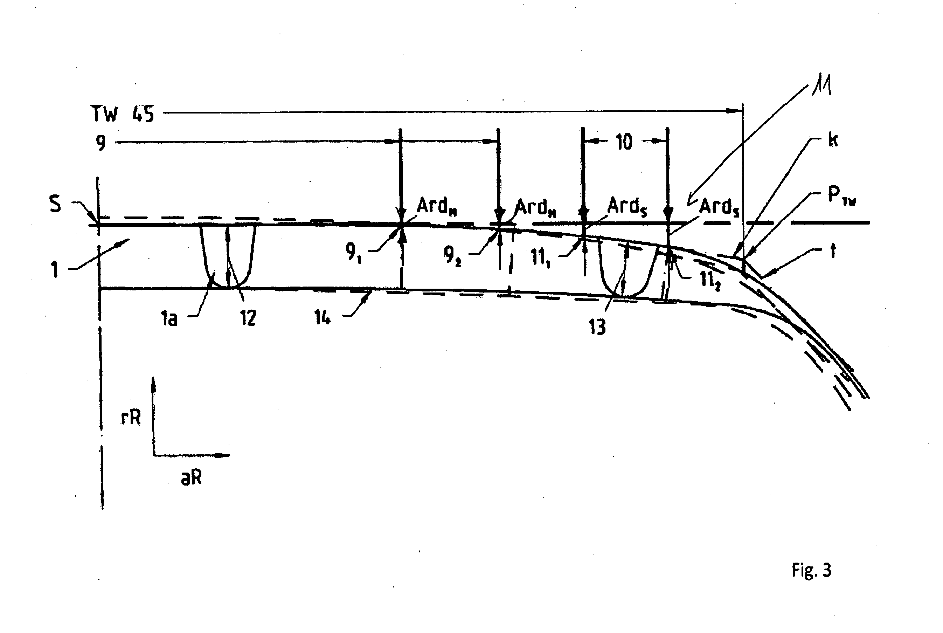

Die **Fig. 3** zeigt eine Querschnittshälfte durch den Laufstreifen 1 des erfindungsgemäßen Reifens (durchgezogene Linie) im Vergleich zu einem Reifen des Standes der Technik (gestrichelte Linie).
Der Übersichtlichkeit halber sind bei dem Reifen des Standes der Technik keine Bezugsziffern in die entsprechende Querschnittshälfte des Laufstreifens eingetragen.

Die obere Linie zeigt die Außenkontur des Laufstreifens, während die untere Linie den Unterkonturzug 14 zeigt.

Der erfindungsgemäße Reifen in Radialbauart unterscheidet sich von dem in Fig. 1 und 2 gezeigten Reifen des Standes der Technik, welcher hier durch die gestrichelte Linie dargestellt ist, darin, dass die Maximaltiefe 12 der Profilrillen 1a innerhalb des Mittenbereiches 9 von TW 45 gleich ist und 7.8 mm beträgt. Die Maximaltiefe 13 der Rillen 1a im Schulterbereich 10 ist um maximal 2 mm kleiner als im Mittenbereich 9 und beträgt 6.6 mm. Zudem ist die Außenkontur des Laufstreifens 1 im Mittenbereich 9 derart flach gestaltet, dass die Außenkonturradiusdifferenz Ard _{M} zwischen dem Zenit S und dem axialen Ende des Mittenbereiches 9, welches zwischen den Punkten 9₁ und 9₂ liegt, weniger als 1 mm beträgt. Das axiale Ende des Mittenbereiches liegt hier bei dem Punkt 9₁ und die ist im Bereich des Überganges zum Schulterbereich, welcher zwischen den Punkten 11₁ und 11₂ liegt, derart gestaltet, dass die Außenkonturradiusdifferenz Ard ₛ zwischen dem Zenit S und diesem Übergang zum Schulterbereich 3 mm bis 5 mm beträgt. Der Übergang zum Schulterbereich liegt hier in dem Punkt 11₁, die Außenkonturradiusdifferenz beträgt hier 3 mm.

Der Mittenbereich 9 erstreckt sich vom Zenit S nach axial außen bis zu einem bestimmten Punkt, welcher in einem Bereich zwischen den Punkten 9₁ und 9₂ liegt, wobei der Punkt 9₁ einer axialen Breite von 0,4 x TW 45 (40%) und der Punkt 9₂ einer axialen Breite von 0,6 x TW 45 (60%) entspricht.

Der Übergang zum Schulterbereich beginnt, vom Zenit S her kommend, ab einem bestimmten Punkt, welcher in einem Bereich zwischen den Punkten 11₁ und 11₂ liegt, wobei der Punkt 11₁ einer axialen Breite von 0,8 x TW 45 (80%) und der Punkt 11₂ einer axialen Breite von 0,9 x TW 45 (90%) entspricht.

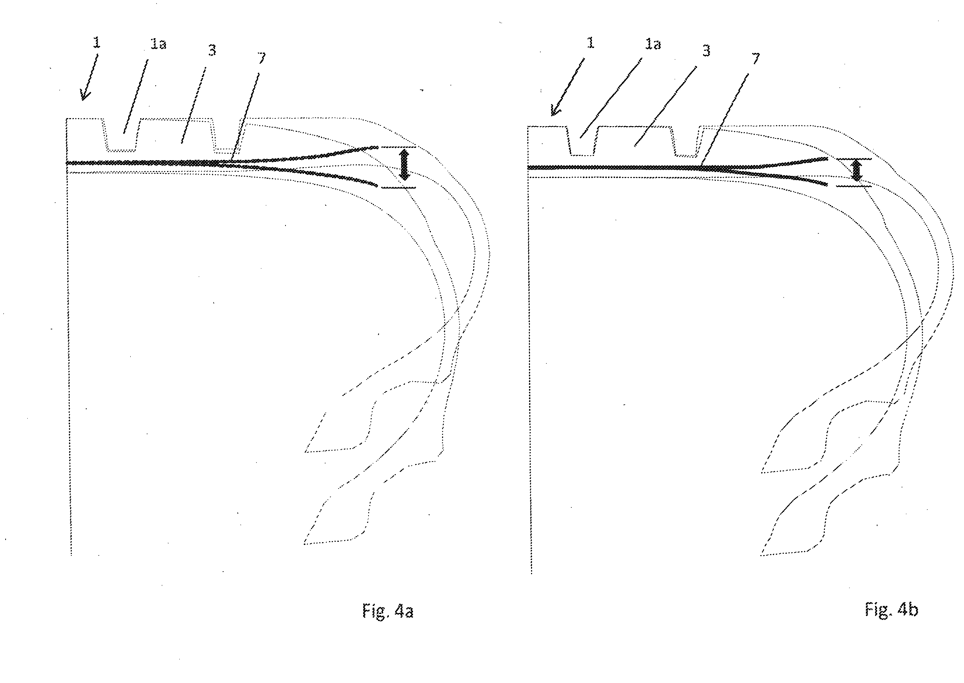

Die **Fig. 4a** zeigt eine Querschnittshälfte eines Reifens des Standes der Technik im Normalzustand und im Betriebszustand, während die **Fig. 4b** eine Querschnittshälfte eines erfindungsgemäßen Reifens im Normalzustand und im Betriebszustand darstellt. Es wird deutlich, dass beim erfindungsgemäßen Reifen die Deformation im Bereich der Gürtelkante und dem darüber liegenden Laufstreifen wesentlich geringer als bei dem Reifen des Standes der Technik ist. Der erfindungsgemäße Fahrzeugluftreifen der Fig. 4b ist in der Fig. 3 beschrieben. Der Zielkonflikt zwischen Quersteifigkeit, Rollwiderstand und Abnutzung ist beim erfindungsgemäßen Reifen auf einem höheren Niveau gelöst.

Die nachfolgende Tabelle zeigt einen Vergleich des Referenzreifens R_{R} mit dem erfindungsgemäß ausgeführten Reifen R_{E}. Beide Fahrzeugluftreifen R_{R} und R_{E} sind PKW-Sommerreifen der Dimension 205/55 R 16 mit gleicher Profilierung.

Der Referenzreifen R_{R} weist innerhalb des Mittenbereiches von TW 45 ungleich maximaltiefe Rillen zwischen 8.8 mm und 8.2 mm auf und die Maximaltiefe der Rillen im Schulterbereich ist um 3 mm kleiner als im Mittenbereich. Zudem ist die Außenkontur des Laufstreifens im Mittenbereich im Vergleich zum erfindungsgemäßen Reifen rund gestaltet, so dass die Außenkonturradiusdifferenz zwischen Zenit und dem axialen Ende des Mittenbereiches 0.6 mm beträgt. Die Außenkontur des Laufstreifens im Bereich des Überganges zum Schulterbereich derart gestaltet ist, dass die Außenkonturradiusdifferenz zwischen Zenit und diesem Übergang zum Schulterbereich 8 mm beträgt.

Bei erfindungsgemäßen Reifen ist die Maximaltiefe der Profilrillen innerhalb des Mittenbereiches von TW 45 gleich und beträgt 7.8 mm. Die Maximaltiefe der Rillen im Schulterbereich ist um maximal 2 mm kleiner als im Mittenbereich und beträgt 6.6 mm. Die Außenkontur des Laufstreifens im Mittenbereich ist derart flach gestaltet, dass die Außenkonturradiusdifferenz zwischen Zenit und dem axialen Ende des Mittenbereiches weniger als 1 mm, nämlich 0.1 mm beträgt. Die Außenkontur des Laufstreifens ist im Bereich des Überganges zum Schulterbereich derart gestaltet, dass die Außenkonturradiusdifferenz zwischen Zenit und diesem Übergang zum Schulterbereich 3 mm beträgt.

Der erfindungsgemäße Reifen R_{E} weist einen um 4 % verbesserten Rollwiderstand als der Referenzreifen R_{R} auf. Die Quersteifigkeit des erfindungsgemäßen Reifens R_{E} ist um 4 % gegenüber dem Referenzreifen R_{R} verbessert. Der erfindungsgemäße Reifen R_{E} weist einen um 15 % verbesserten Abrieb als der Referenzreifen R_{R} auf.

**Tabelle**

| | Referenzreifen R_{R} | Erfindungsgemäßer Reifen R_{E} |
|---|---|---|
| | [%] | [%] |
| Quersteifigkeit ermittelt nach P-CRCS | 100 | 104 |
| Abrieb ermittelt nach P-ABR | 100 | 115 |
| Rollwiderstand ermittelt nach P-RRI28 | 100 | 104 |

### Bezugszeichenliste

- 1: Laufstreifen
- 1a: Umfangsrille
- 2: Radialkarkasse
- 3: Profilpositiv
- 4: Wulstkern
- 5: Seitenwand
- 6: Kernprofil
- 7: Gürtel
- 7a: Gürtellage
- 7b: Gürtellage
- 8: Gürtelbandage
- 8a: Gürtelbandagenlage
- 8b: Gürtelbandagenlage
- 9: Mittenbereich
- 9₁: Mittenbereichende axial innen
- 9₂: Mittenbereichende axial außen
- 10: Schulterbereich
- 11: Übergang Schulterbereich
- 11₁: Übergang Schulterbereich axial innen
- 11₂: Übergang Schulterbereich axial außen
- 12: Maximaltiefe Rillen im Mittenbereich
- 13: Maxialtiefe Rillen Schulterbereich
- 14: Unterkonturzug

- Ard_{M}: Außenkonturradiusdifferenz Zenit zu Mittenbereich
- Ard_{S}: Außenkonturradiusdifferenz Zenit zu Schulterbereich
- S: Zenit
- t: Tangente
- k: Kurve

## Patentansprüche

1. Fahrzeugluftreifen in Radialbauart mit einem zumindest zweilagigen Gürtel (7) und mit einem Laufstreifen (1), wobei der Laufstreifen (1) Profilrillen (1a) innerhalb der axialen Breite von TW 45 zur Bildung von Profilpositiven (3) aufweist, deren Maximaltiefe (12, 13) innerhalb der axialen Breite von TW 45 variiert und wobei der Laufstreifen (1) eine am montierten und aufgepumpten Reifen anhand von Außenkonturradiendifferenzen (Ard_{M}, Ard_{S}) definierte Außenkontur aufweist, wobei die Maximaltiefe (12) der Profilrillen (1a) innerhalb eines Mittenbereiches (9) von TW 45 gleich ist und wobei die Maximaltiefe (13) der Rillen (1a) im Schulterbereich (10) um maximal 2 mm kleiner als im Mittenbereich (9) ist,
**dadurch gekennzeichnet,**
**dass** die Außenkontur des Laufstreifens im Mittenbereich (9) derart flach gestaltet ist, dass die Außenkonturradiusdifferenz Ard_{M} zwischen Zenit (S) und dem axialen Ende des Mittenbereiches (9₁, 9₂) weniger als 1 mm beträgt und dass die Außenkontur des Laufstreifens im Bereich des Überganges zum Schulterbereich (11) derart gestaltet ist, dass die Außenkonturradiusdifferenz (Ard_{S}) zwischen Zenit (S) und diesem Übergang zum Schulterbereich (11) 3 mm bis 5 mm beträgt.

2. Fahrzeugluftreifen nach Anspruch 1, **dadurch gekennzeichnet, dass** eine Gürtelbandage (8) zwischen dem Gürtel (7) und dem Laufstreifen (1) angeordnet ist, wobei die Gürtelbandage (8) vorzugsweise einlagig ausgeführt ist.

3. Fahrzeugluftreifen nach Anspruch 1 oder 2, **dadurch gekennzeichnet, dass** der Gürtel (7) zweilagig ausgeführt ist, wobei die Festigkeitsträger der beiden Gürtellagen (7a, 7b) einen Gürtelwinkel von kleiner 24°, gemessen im Reifenzenit (S), aufweisen.

4. Fahrzeugluftreifen nach einem der Ansprüche 1 bis 3, **dadurch gekennzeichnet, dass** die Außenkonturradiusdifferenz (Ard_{S}) zwischen Zenit (S) und dem axialen Ende des Mittenbereiches (9₁, 9₂) etwa 0,3 mm beträgt.

## Claims

1. Vehicle pneumatic tyre of a radial design having an at least two-layer belt (7) and having a tread (1), wherein the tread (1) has tread grooves (1a) within the axial width of TW 45 for forming profile positives (3), the maximum depth (12, 13) of said tread grooves varying within the axial width of TW 45, and wherein the tread (1) has an outer contour which is defined on the fitted and inflated tyre on the basis of outer contour radius differences (Ard_{M}, Ard_{S}), wherein the maximum depth (12) of the tread grooves (1a) within a centre region (9) of TW 45 is identical, and wherein the maximum depth (13) of the grooves (1a) in the shoulder region (10) is a maximum of 2 mm smaller than in the centre region (9), **characterized in that** the outer contour of the tread in the centre region (9) is configured to be flat such that the outer contour radius difference Ard_{M} between the zenith (S) and the axial end of the centre region (9₁, 9₂) is less than 1 mm, and that the outer contour of the tread in the region of the junction with the shoulder region (11) is configured in such a way that the outer contour radius difference (Ard_{S}) between the zenith (S) and this junction with the shoulder region (11) is between 3 mm and 5 mm.

2. Vehicle pneumatic tyre according to Claim 1, **characterized in that** a belt binding band (8) is arranged between the belt (7) and the tread (1), wherein the belt binding band (8) is preferably of a one-layer configuration.

3. Vehicle pneumatic tyre according to Claim 1 or 2, **characterized in that** the belt (7) is of a two-layer configuration, wherein the reinforcements of the two belt layers (7a, 7b) have a belt angle of less than 24°, measured in the tyre zenith (S).

4. Vehicle pneumatic tyre according to one of Claims 1 to 3, **characterized in that** the outer contour radius difference (Ard_{S}) between the zenith (S) and the axial end of the centre region (9₁, 9₂) is approximately 0.3 mm.

## Revendications

1. Pneu de véhicule de construction radiale comprenant une armature à au moins deux couches (7) et une bande de roulement (1), la bande de roulement (1) présentant des gorges profilées (1a) à l'intérieur de la largeur axiale de TW 45 pour former des parties profilées positives (3), dont la profondeur maximale (12, 13) varie à l'intérieur de la largeur axiale de TW 45 et la bande de roulement (1) présentant un contour extérieur sur le pneu monté et gonflé défini à l'aide de différences de rayons de contour extérieur (Ard_{M}, Ard_{S}), la profondeur maximale (12) des gorges profilées (1a) à l'intérieur d'une région centrale (9) étant égale à TW 45 et la profondeur maximale (13) des gorges (1a) dans la région d'épaulement (10) étant inférieure au maximum de 2 mm à celle dans la région centrale (9),
**caractérisé en ce que**
le contour extérieur de la bande de roulement dans la région centrale (9) est configuré sous forme plate de telle sorte que la différence de rayons de contour extérieur Ard_{M} entre le zénith (S) et l'extrémité axiale de la région centrale (9₁, 9₂) soit inférieure à 1 mm et **en ce que** le contour extérieur de la bande de roulement dans la région de la transition à la région d'épaulement (11) est configuré de telle sorte que la différence de rayons de contour extérieur (Ard_{S}) entre le zénith (S) et cette transition à la région d'épaulement (11) mesure de 3 mm à 5 mm.

2. Pneu de véhicule selon la revendication 1, **caractérisé en ce qu'**un bandage d'armature (8) est disposé entre l'armature (7) et la bande de roulement (1), le bandage d'armature (8) étant réalisé de préférence en une couche.

3. Pneu de véhicule selon la revendication 1 ou 2, **caractérisé en ce que** l'armature (7) est réalisée en deux couches, les renforts des deux couches d'armature (7a, 7b) présentant un angle d'armature inférieur à 24°, mesuré au zénith du pneu (S).

4. Pneu de véhicule selon l'une quelconque des revendications 1 à 3, **caractérisé en ce que** la différence de rayons de contour extérieur (Ard_{SS}) entre le zénith (S) et l'extrémité axiale de la région centrale (9₁, 9₂) vaut environ 0,3 mm.
